# EUROPEAN PATENT APPLICATION

(11) **EP 4 763 377 A1**
(43) Date of publication of application: **24.06.2026**
(21) Application number: 25172971.1
(22) Date of filing: 28.04.2025
(51) Int. Cl.: B22F 7/06, B22F 7/08, B22F 10/22, B22F 10/364, B22F 10/80, B33Y 10/00, B33Y 30/00, B33Y 40/10, B33Y 50/02, B22C 9/02, B22D 23/00, B22F 10/40, B22F 10/85, B22F 12/13, B22F 12/00, B22F 12/30, B22F 12/55, B22F 12/58, B22F 12/70, B22F 12/82

(54) **SYSTEM AND METHOD FOR ADDITIVE METAL CASTING**

(30) Priority: 17.12.2024 US 202463734857 P
(71) Applicant: Magnus Metal Ltd., 9782000 Revadim (IL)
(72) Inventor: Holcman, Ido, 7646627 Rehovot (IL); Miller, Yoav, 7621783 Rehovot (IL); Lavi, Gil, 7045868 Ness Ziona (IL); Svetlizky, Evgni David, 5956424 Bat Yam (IL); Tevet, Ofer, 4641745 Herzelia (IL)
(74) Representative: Zimmermann & Partner Patentanwälte mbB

(57) **Abstract**

A hybrid casting method and system for processing an input part to receive a final cast, the method includes applying an additive casting process on a build area of the input cast, which includes constructing an interfacing mold region in the build area at least around an interfacing region between the build area of the input cast and the additive cast portion, heating the interfacing region and generating a melt zone in the interfacing region, and optionally providing at least one cast property modifying powder to the interfacing region prior to applying the additive casting process.

## Description

### CROSS REFERENCE TO RELATED APPLICATIONS

This application claims priority to US Patent Application 63/734,857 filed Dec 17, 2024, which is incorporated herein by reference

### FIELD

The present disclosure relates to metal casting in general and, in particular, to apparatus and methods for improvements to additive metal casting.

### BACKGROUND

Most of the demand for cast metal products, especially for iron and steel, is currently met by traditional casting techniques, which require volume manufacturing as a key factor in cost reduction and commercial viability. Traditional casting involves the production of complete molds followed by the filling of the mold cavities with molten metal. In some cases, the production of molds includes fabricating a casting pattern from which the mold is made.

Production and management of casting patterns and molds introduce several factors that contribute significantly to the costs and turn-around times of traditional casting. Fabricating patterns and molds is both expensive and time-consuming, and using them in ongoing casting operations introduces the need for cleaning, maintenance, repair, and reconditioning. Additive manufacturing techniques may be used to fabricate patterns and molds individually on demand, thereby easing or eliminating the burden of long-term pattern and mold storage. Nevertheless, volume manufacturing still remains a key factor.

In addition, long-term storage and inventory of patterns and molds can incur further significant expenses and management burdens. This effort may be justified for large-scale production of a particular cast metal part, but in an aftermarket situation, when market demand for that particular part diminishes, it may be difficult to justify the ongoing overhead of maintaining molds and patterns for the production of that part. When it becomes prohibitively expensive to continue manufacturing the part, the part's replacement availability typically becomes limited to existing inventories.

Additive metal casting has the potential to obviate the problems and restrictions associated with patterns and molds, as discussed previously, and promises to confine molten metal to more easily managed amounts and extents in contained local environments to improve safety and minimize the effects of environmental hazards.

While potentially solving the mold and pattern-related problems of traditional casting, however, additive metal casting introduces its own restrictions and limitations: In terms of production flow, current additive metal casting techniques typically have limited throughput and have proven difficult to scale to large part sizes and masses and be commercially viable. Consequently, despite the potential advantages of additive metal manufacturing, the high costs, low throughputs, scaling difficulties, and metallurgical challenges prevent the adoption of additive techniques for widespread industrial use, especially for manufacturing high-performance metal components.

In the casting of large grey iron, ductile iron, and steel components such as engine blocks, cylinder heads, gear heads, and the like, metal-to-metal joining is sometimes employed. Such metal-to-metal joining involves welding, adhesive bonding, or mechanical joining.

Hybrid production techniques aim to combine the benefits of traditional casting with additive metal manufacturing. Such production techniques are disclosed, for example, in European Patent Publication EP2801512B1 filed May 7, 2013; US Patent Publication US10668528B2 filed Nov. 2, 2015; US Patent Publication US20160158842A1 filed Dec. 1, 2015; US Patent Publication US20190030609A1 filed June 27, 2018; and France Patent Publication FR3121057A1 filed March 23, 2021.

There thus is a need for additive metal casting methods and apparatus that facilitate high-volume manufacturing at a reduced cost, increased throughput, and high metallurgical quality and consistency. These goals are met by embodiments of the present disclosure.

### GENERAL DESCRIPTION

According to an aspect of the present disclosure, there is provided a hybrid casting method for processing an input part to receive a final cast having an additive cast portion, the method comprising applying an additive casting process on a build area of the input cast, the hybrid casting method further comprising: constructing an interfacing mold region in the build area at least around an interfacing region between the build area of the input cast and the additive cast portion, heating the interfacing region and generating a melt zone in the interfacing region prior to applying the additive casting process.

The hybrid casting method may further comprise and optional operation of providing at least one cast property modifying powder to the interfacing region.

In some embodiments, the input cast is manufactured using a traditional casting process. In some embodiments, the input cast is composed of a ferrous alloy and the final cast comprises one or more of: a portion of the input part and an additive cast portion thereon; the input cast with a portion having different mechanical cast properties, different chemical cast properties, different microstructure properties, different carbon concentration.

Constructing the interfacing mold region may comprise constructing a multi-element support structure including: an enclosure element forming an outer containment structure; an internal support element filling at least a portion of hollow volumes in the input cast and space between the input cast and the enclosure element; and an interface mold element defining a build plane for the interfacing region and subsequent additive cast portion.

In some embodiments, the hybrid casting method further comprises one or more operations of a group consisting of: input cast preparation, build area preparation, positioning and alignment, interfacing region processing, and post processing. The input cast operation comprising one or more operations of a group consisting of: removing oil from the input part or a portion thereof, cleaning the input part or a portion thereof, sand blasting the input part or a portion thereof, generating a digital representation of the input part or a portion thereof, obtaining a digital representation of the input part or a portion thereof, and assessing or receiving material composition and properties of the input part or a portion thereof. The build area preparation operation may comprise one or more operations of a group consisting of: generating a build plan for at least one of the interfacing zone, the mold interfacing region, the melt zone in the interfacing zone, a provision of the inoculant and/or additive powder and the additive casting process, generating a support and/or encoring plan for part feature/s, and generating an arrangement plan for casting system units in accordance with the build plan. The operation of generating a build plan may comprise generating the build plan in response to a digital part representation of the input cast and material composition and properties of the input cast, wherein the build plan specifies one or more of processing parameters relating to build area support, interfacing mold region, interfacing zone and the melt zone in the input cast. The interfacing region processing operation may comprise one or more operations of a group consisting of: filling hollow input cast features with one or more support material, heating portions of the input cast outside of the build area to thereby reduce heat lose from the build area to the input cast, providing at least one cast property modifying powder to the melt zone to compensate for a fading of the cast property modifying powder in response to heating and melting, and providing at least one cast property modifying powder to the melt zone to cause a cast property modifying process resulting in predefined target properties of the final cast. The post processing operation may comprise removing mold regions and post processing finishing.

In some embodiments, constructing the interfacing mold region comprises constructing a multi-element support structure including: an enclosure element forming an outer containment structure; an internal support element filling at least a portion of hollow volumes in the input cast and space between the input cast and the enclosure element; and an interface mold element defining a build plane for the interfacing region and subsequent additive cast portion. Different support elements may be made of different mold material. The multi-element support structure may be configured to provide structural stability during processing and maintain geometric accuracy of the input cast during processing.

In some embodiments, the additive casting process comprises a layer-by-layer formation of a stack of production layers, each production layer comprising at least one object region associated with at least one mold region, and formation of each production layer comprises forming the at least one mold region and depositing molten metal therein prior to forming a subsequent production layer.

In some embodiments, the additive casting process comprises generating a stack of production layers having mold regions and object regions, the mold regions constituting a mold-in-progress and the object regions constituting a cast-in-progress held within the mold-in-progress, the method further comprising, for each production layer, iteratively constructing a mold region of a current production layer on top of the stack of production layers and processing an object region of the current production layer, wherein processing the object region of the current production layer comprises: melting a first volume of previously-solidified metal in the cast-in-progress and dropping a second volume of molten metal into the first volume, wherein the first volume and the second volume accumulate into a melt zone of at least a predetermined minimum volume of molten material required for cast-property modification processes; providing an allocated amount of at least one cast-property modifying powder to the melt zone; maintaining the melt zone under a melt state for a predetermined minimum duration; and maintaining the melt zone under inert environment while in melt state. In some embodiments, the molten metal is composed of a ferrous alloy and the predetermined minimum volume is at least of 2 cubic centimetres. In some embodiments, the allocated amount of the cast property modifying material is adjusted based on a predetermined fading rate of the cast property modifying powder during remelting. In some embodiments, the predetermined minimum volume, when cooling from its melting temperature, has a cooling rate of no more than 2°C/s.

In some embodiments, the additive casting process comprises, one current production layer after the other: constructing a mold region of the current production layer before producing the object region of the current production layer; moving a molten metal depositor over a deposition path and depositing molten metal at a predetermined deposition temperature in multiple working areas at the object region of the current production layer according to a build plan; and moving one or more heaters over the deposition path and heating the multiple working areas, wherein heating the multiple working areas comprises at least one of: (1) heating the multiple working areas to a pre-deposition target temperature before depositing metal on the multiple working areas, and (2) heating the multiple working areas to a post-deposition target temperature after depositing metal on the multiple working areas, and wherein heating the multiple working areas further comprises generating a melt zone in working areas, wherein the method further comprises constructing support for an interfacing mold region in the build area, heating an interfacing zone in the build area and optionally providing inoculant and/or additive powder to the interfacing zone.

According to an aspect of the present disclosure, there is provided a hybrid casting system for processing an input part to receive a final cast having an additive cast portion, the system comprising a mold construction assembly and a metal processing assembly operable in synchrony to produce the additive cast portion by forming a stack of production layers having mold regions and object regions, the mold regions constituting a mold-in-progress and the object regions constituting a cast-in-progress held within in the mold-in-progress, wherein the metal processing assembly comprises a surface melter for melting a first volume of previously-solidified metal in the cast-in-progress; a metal depositor for dropping a second volume of molten metal into the first volume; a powder introduction unit for selectively delivering an allocated amount of at least one cast-property modifying powder, wherein the first volume and the second volume accumulate into a melt zone of at least a predetermined minimum volume of molten material required for cast-property modification processes, wherein the mold construction assembly is further operable to construct an interfacing mold region around at least a portion of the input part thereby defining an interfacing region, and the metal processing assembly is further operable for heating the interfacing region and generating a melt zone in the interfacing region, and optionally providing at least one cast property modifying powder to the interfacing region, and wherein the stack of production layers is fabricated onto the interfacing region. In some embodiments, the mold constructor is further configured to construct a multi-element support structure around at least a portion of the input cast, the support structure comprising: an enclosure mold element; an internal support element; and an interface mold element defining a build plane, made of mold material used for additive casting process, wherein the mold constructor is operable to construct the support elements in a sequence that ensures structural stability during the hybrid casting process.

The hybrid casting system may further comprise one or more of: an input part scanner operable for generating digital part representation of the input part; an input part cleaner operable for carrying out input part cleaning; an input part analyzer operable for assessing material composition and properties of the input part; and a build plan generator operable for generating a build plan for the final part based on at least the digital part representation, the material composition and properties of the input part and target properties of the final part. The metal processing assembly may further comprise an inert environment unit, and at least sections of at least the depositor, surface melter and powder introduction unit in proximity to the melt zone and the free-fall molten metal are maintained under inert environment.

According to an aspect of the present disclosure, there is provided a hybrid casting system for receiving an input cast and adding metal to the input cast by producing, on a build area on the input cast, multiple production layers having mold regions and object regions defined by the mold regions, one current production layer after the other, the system comprising: a movable mold constructor operative to construct a mold region for a current production layer; a movable molten metal depositor operative to deposit molten metal at a predetermined deposition temperature in multiple working areas at the object region of the current production layer; one or more surface heater operative for heating the multiple working areas; one or more powder feeder operative to provide inoculant and/or additive powder to the working areas; at least one motion unit coupled to the movable build table, the movable mold constructor, movable molten metal depositor, the at least one heater and the at least one or more powder feeder; and a controller operative to iteratively control at least the build table, mold constructor, molten metal depositor, at least one heater, the at least one powder feeder, and the at least one motion unit to produce the metal object according to a predetermined build plan, wherein the controller is operative to heating the multiple working areas further comprises generating a melt zone in working areas, to construct support for an interfacing mold region in the build area and to selectively provide inoculant and/or additive powder to the interfacing object region.

In some embodiments, the metal is one or more of a group consisting of: cast grey iron, ductile iron, steel, Inconel, titanium alloys, cast iron alloys.

In some embodiments, the cast property modifying powder comprises a chemically-modifying material and/or a metallurgically-modifying material.

In some embodiments, the cast property modification processes comprise at least one of: (1) controlled graphite nucleation and growth achieving a predetermined graphite morphology and/or distribution; (2) controlled phase transformation producing a predetermined ratio of phases; (3) in-situ chemical composition modification achieving predetermined local material properties; (4) Grain refinement producing enhanced mechanical properties; (5) precipitation hardening; or (6) controlled solidification process producing predetermined dendrite arm spacing.

In some embodiments, the cast property-modification processes are controlled by one or more of (1) maintaining the predetermined minimum volume at a predetermined temperature within a specified range for a predetermined dwell time; (2) maintaining predetermined temperature gradients across the predetermined minimum volume.

In some embodiments, the molten metal is cast iron alloy and the cast property modifying powder comprises one or more powder material selected from (1) a group of grain refiners consisting of Titanium-based alloy, Zirconium-based alloy, Niobium-based alloy and/or (2) a group of inoculants consisting of Ferrosilicon-based inoculants, aluminum-based inoculants, Silicone carbide-based inoculants, Calcium-based inoculants, Strontium-based inoculant, Cerium-based inoculants, Sodium-based inoculants, Barium-based inoculants, Rare earth elements and/or (3) a group of Deoxidizers consisting of Aluminum, Silicon, Manganese, Calcium and/or (4) a group of Microstructure modifiers consisting of Magnesium, Cerium, Lanthanum, Yttrium and/or (5) a group of Carbide formers consisting of Vanadium, Titanium, Tellerium, Tungsten, Molybdenum.

In some embodiments, the molten metal is steel and/or steel alloy and the cast property modifying powder comprises one or more powder material selected from (1) a group of grain refiners consisting of Aluminum-based alloy, Titanium-based alloy, Zirconium-based alloy, Niobium-based alloy and/or (2) a group of Deoxidizers consisting of Aluminum, Silicon, Manganese, Calcium and/or (3) a group of Microstructure modifiers consisting of Magnesium, Cerium, Lanthanum, Yttrium and/or (4) a group of Carbide formers consisting of Vanadium, Titanium, Tungsten, Molybdenum, Niobium and/or (5) a corrosion resistance modifiers consisting Chromium, Nickel, Molybdenum, Silicon, Aluminum, Titanium, Niobium, Phosphorus.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 illustrates three exemplary hybrid casting use cases;
Fig. 2 is a flow chart of a hybrid casting method according to embodiments of this disclosure;
Fig. 3a is a schematic illustration of an additive casting system according to the embodiments of the present disclosure;
Figs. 3b-3c illustrates examples of production scenarios A and B carried out by a metal processing assembly of the additive casting system of Fig. 3a according to embodiments of the present disclosure;
Figs. 4a-e depict various stages of Experiment 1 of reconstructing a cast part employing the hybrid casting method and system according to embodiments of the present disclosure;
Figs. 5a-5f depict experimental information and measurement results related to Experiment 1;
Figs. 6a-6d depict several approaches for supporting and positioning the input cast with embodiments of the present disclosure; and
Figs. 7a-7b are microscopy images and graphical data showing experimental results of magnesium treatment in ductile iron according to Experiment 2.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS

In the following detailed description, numerous specific details are set forth in order to provide a thorough understanding of the present disclosure. However, it will be understood by those skilled in the art that the present disclosure may be practiced without these specific details. In other instances, well-known methods, procedures, and components have not been described in detail so as not to obscure the present disclosure.

Aspects of the present disclosure utilize the additive processing of metal, including a previously-solidified metal - bounded by mold regions. A stack of production layers having mold regions and object regions is additively processed. The mold regions constitute a mold-in-progress and the object regions constitute a cast-in-progress held within in the mold-in-progress. In the processing of a current production layer, the current mold region is first constructed on the stack of production layers. Then, the corresponding object region is processed. A surface melter melts a first volume of previously-solidified metal in the cast-in-progress bounded by the mold-in-progress. A metal depositor drops a second volume of molten metal into the first volume, wherein said first volume and said second volume accumulate into a melt zone of at least a minimum volume of molten material. A powder introduction unit may deliver an allocated amount of at least one cast-property modifying powder into a melt zone. For the processing of molten ferrous alloys, the minimum volume is 2 cc and above.

The minimum volume of approximately 2 cubic centimeters represents a critical threshold that works in conjunction with mold region containment. The mold regions provide the mechanical and thermal boundary conditions necessary to process these volumes, while the volumes themselves provide the thermal mass needed for proper metallurgical control. Without mold containment, such volumes of molten metal would be impossible to process with geometric stability. Without sufficient volume, even with mold containment, proper metallurgical processes cannot be adequately controlled or achieved.

This additive treatment of voxels of metal having a minimum volume for individual processing while bounded in mold regions (voxelated additive casting) is characterized in slow cooling rates - starting at the order of 1°C/second and above. Voxelated additive casting thereby can facilitate perfectly-bonded cast having metal properties characterizing traditional casting as well as cast-property modification. Voxelated additive casting is capable of compensating for a change in cast properties due to successive reheating and remelting associated with Voxelated additive casting.

In the context of hybrid casting, these two fundamental principles - mold-bounded processing and minimum volume requirements - are particularly critical. The interface between the input cast and newly-added material must be processed as a sufficient volume to enable proper metallurgical bonding and property control, while the mold regions must provide adequate containment to prevent deformation of both the input cast and the interface region during processing. The success of hybrid casting according to the present disclosure relies on maintaining these principles throughout the building process.

Additional aspects of systems and methods for additive casting are described, for example, in PCT Patent Publications WO2019/053712A1 filed Sept. 6, 2018, WO2022/243921A1 filed May 19, 2022, and WO2023/002468A1 filed May 15, 2022, all of which are incorporated herein by reference. The additive casting technique described herein is suitable for hybrid casting applications. In hybrid casting, a portion of the final cast is built on top of a portion of the final part that was manufactured e.g., by traditional casting techniques. Comparing to, e.g., SLM (Selective Laser Melting) and DED (direct energy deposition), which were investigated for hybrid casting and not widely adopted, molten metal additive casting as described herein may better suit hybrid casting applications.

The hybrid casting methods and systems described herein are founded on two interconnected fundamental principles that enable successful processing of ferrous alloys: First, the processing of metal within confined mold regions, which enables controlled melting and processing of substantial volumes of molten metal while maintaining geometric stability. Second, the processing of substantial volumes of molten metal (2cc and above) which enables proper metallurgical control and cast property modifications through controlled thermal conditions and adequate processing time. These principles work in concert - the mold regions enable the processing of larger volumes of metallic material by providing containment and thermal management, while the larger volumes of metallic material enable proper metallurgical processes by providing sufficient thermal mass and processing time.

In the context of hybrid casting - involving the processing of new metal on/with an input cast, the processing of the input cast involves bounding an interfacing region with an interfacing mold region and processing portions of the input cast, including remelting. The stack of production layers starts with the interfacing: the mold in progress starts with the interfacing mold region and the cast in progress starts with the interfacing region.

The mold-in-progress is configured to maintain the shape of the cast in progress and withstand the expansion and shrinking forces exercised by cast-in-progress during metal processing. Mold materials may include mold materials in paste form, powder form, granular form, slurry form, and mold materials mixed with binders, releasing agents, activating agents, UV absorbing particles, crosslinking agents, heat-absorbing particles, or other additives to facilitate mold fabrication and use. According to embodiments of the present disclosure, mold materials include, but are not limited to, ceramics (e.g., zirconia, alumina, magnesia, etc.), sand, clay, metallic powders, and any combination thereof. The production of the mold regions may be performed in-situ or ex-situ. In various in-situ embodiments, a mold constructor may deposit mold material. In an ex-situ embodiment, fabricated mold regions and/or mold frames assigned with multiple production layers are obtained from a remote source.

The process of mold construction may comprise treating mold regions' upper surface and inner walls e.g., with heat treatment units (e.g., drying or hardening), mechanical treatment units (e.g., polishing, milling, grinding) and/or chemical treatment units (e.g., coating).

The metal (or metallic) object is fabricated in a series of production layer fabrication operations carried out on a build table. In each production layer, a mold region is first fabricated. Upon completion of the mold region of the current production layer - the object region is fabricated by processing previously solidified metal depositing molten metal into the mold region and proc. The deposition system sequentially deposits molten metal in multiple working areas of the object region of the currently-produced production layer according to a building plan defining a deposition path and a deposition velocity. The mold regions may be structured as multi-zones region, e.g. comprising a metal-facing mold zone, support mold zone that may be made of compressible ceramic, and optionally an enclosure for enclosing the compressible ceramic support mold region.

According to an aspect of the present disclosure, there is provided a molten metal casting method and system thereof for receiving an input cast and adding metal to the input cast by producing on the input cast multiple production layers having mold regions and object regions defined by the mold regions, one current production layer after the other.

According to an aspect of the present disclosure, there is provided a molten metal casting method and system thereof for receiving an input cast and treating a portion of the input cast with voxelated additive casting techniques for modifying cast properties in this portion of the input cast.

According to an aspect of the present disclosure, there is provided a molten metal casting method and system thereof for receiving a faulty cast and repairing the faulty cast by processing a portion of the faulty cast with voxelated additive casting and for producing on the faulty cast multiple production layers having mold regions and object regions defined by the mold regions, one current production layer after the other.

Surface heating of metal encapsulated within a mold region up to remelting of the metal is a principal operation of voxelated additive casting according to the embodiments of the present disclosure.

Concurrently with molten metal deposition at the production layer level, surface heating is provided to the currently-produced production layer. Melting may be achieved during a preparatory operation, during pre-deposition heating, during metal deposition, and/or during post-deposition heating.

In the context of hybrid casting, surface heating is provided to an interfacing region in the input cast. The term 'interfacing region in the input cast' (also referred to as "interfacing object region") denotes a part of the input cast that is prepared for receiving the metal and/or cast property modifying powder to be added. The preparation of the interfacing region in the input cast requires heating, including up to melting (also referred to herein as "remelting"). To this end, the interfacing region in the input cast is wrapped or encapsulated with an interfacing mold region. The interfacing region is heated and a melt zone is created.

The heat that is provided to the interfacing object zone of the input cast and to the object regions of the previously-fabricated production layers is aimed at achieving the following impacts: (1) improving the bonding between the molten metal to be deposited and the previously-deposited molten metal; (2) influencing the metallurgical consistency and isotropy at the grain microstructure level, by controlling local thermal cycling profiles before, during, and after the processing of molten metal; (3) prepare the molten metal in the interfacing object zone of the input cast and in the working areas to receive cast property modifying powder before, concurrently to or after molten metal deposition.

The operations that are carried out in the fabrication of the object region of the currently-produced production layer impact the previously-produced object region of the previously-produced production layer and the interfacing object zone of the input cast. In some embodiments of the present disclosure, the shape and depth of the melt zones are controllable. A desired portion of the input cast can thus be remelted. In some embodiments, the depth of the remelted area may be in the range of 5-150mm, for example, between 5-10mm, 8-40mm, 5-50mm, 8-80mm, 8-100mm, 8-120mm, 10-120mm, 10-150mm.

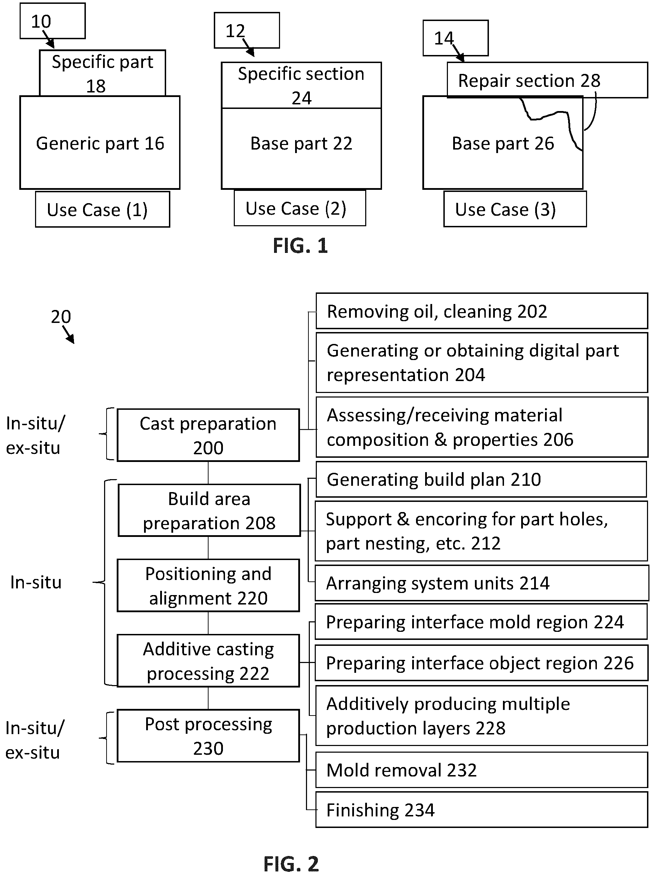

**Fig. 1** illustrates three exemplary hybrid casting use cases requiring voxelated additive casting methods and systems according to aspects of the present disclosure.

Use Case **(1)** - generic input cast and specific addition: Part **10** is composed of two main sections: a generic part **16** and a specific part **18.** Generic part **16** may be manufactured e.g., at high volume and low cost by traditional casting techniques. The specific part may be produced directly on the generic part with perfect bonding and at desired shape, composition, microstructure and properties. By this approach, the part seller may manufacture a family of parts, each with its own fitted specific part, at relatively fast production process and lower costs comparing the production of the family of complete parts by traditional casting.

Hybrid casting according to the present disclosure enables an agile inventory management paradigm by implementing a two-stage manufacturing approach. The two-stage manufacturing process begins with the high-volume production of standardized base geometries through traditional casting methods, followed by customization through additive manufacturing processes to meet specific application requirements. This hybrid strategy optimizes manufacturing logistics by reducing lead times and warehouse requirements while maintaining the ability to rapidly respond to diverse market demands. The approach significantly reduces inventory carrying costs while maintaining production flexibility.

The hybrid casting approach according to the present disclosure finds particular utility in tooling applications, where it enables the modification of existing tool surfaces to accommodate design changes. This capability allows manufacturers to add features or modify existing geometries without the need for complete tool replacement. The process facilitates rapid prototyping and iteration of tool designs, significantly reducing lead times associated with design modifications. This approach not only yields substantial cost savings compared to traditional tool replacement but also enables the implementation of complex geometric modifications and can enhance tool life through selective reinforcement of high-wear areas.

Use Caser **(2)** - processing a specific section of the input cast: Part **12** may be a grey iron part casted using traditional casting. In this example, only a specific section **24** is planned as grey iron, ductile iron or compact graphite iron having different properties compared to the base part. Specific zone **112** may be treated and/or added and its composition, microstructure and properties may be altered while the rest of part **12** - base part **22** - remains unchanged.

In the development of multi-alloy components, hybrid casting technology according to embodiments of this disclosure enables the strategic integration of different alloys within a single part. This capability allows for the optimization of material properties in specific sections of the component, enabling precise control over interfacial properties between different materials. The resulting functionally graded materials exhibit custom property profiles that would be impossible to achieve through conventional single-alloy casting methods, offering opportunities for weight reduction and performance optimization through novel interfacial bonding mechanisms.

Use Case **(3)** - repair: Part **14** may be a traditionally casted part (or a part manufactured using any additive manufacturing technique), that, during its use in the field, became faulty: portion of the cast may be broken, cracked or otherwise defective. The faulty part may be repaired by e.g., adding molten metal or treating the faulty section **28** without changing the base part **26.** In some embodiments, a portion of base part **26** is removed (or mechanically treated, e.g., grinded, polished or milled) before new metal is added (not shown).

In the realm of component repair, hybrid casting according to embodiments of the present disclosure enables the restoration of damaged parts through the combination of traditional casting methods and advanced additive manufacturing techniques. This approach maintains the original part's inherent properties while incorporating new material at the repair site, resulting in significantly reduced waste compared to complete component replacement. The technique is particularly valuable for high-value components where replacement costs are substantial, and the hybrid repair process can potentially enhance the mechanical properties at the repair interfaces.

For the simplicity of explanation, aspects of the present disclosure will be described mainly with reference to use case **(1).**

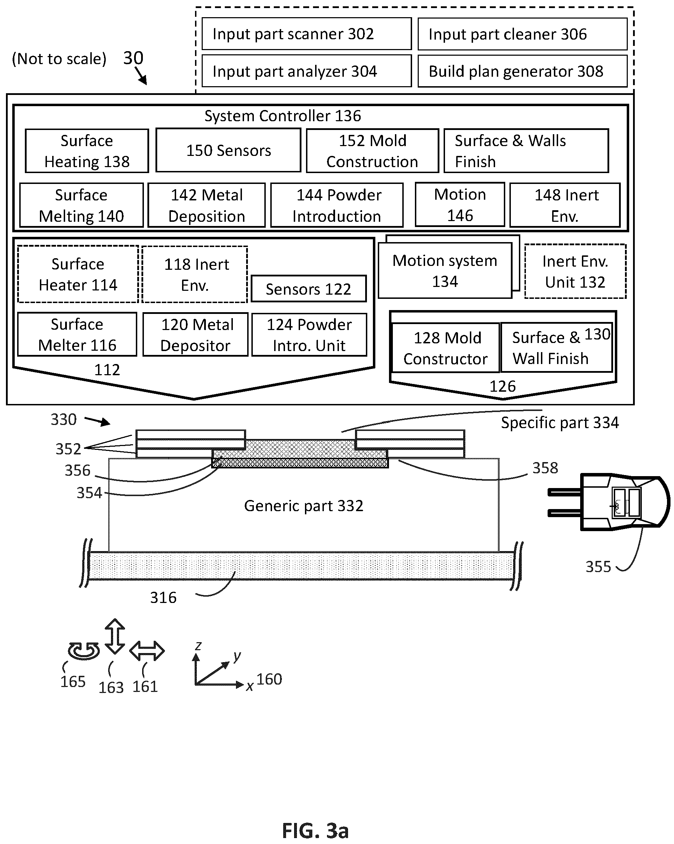

**Fig.** 2 is a flow chart of a hybrid casting method **20** according to embodiments of this disclosure. Method **20** may be implemented by molten metal additive casting system **30** described in **Fig. 3a** herein. Method **20** may comprise five main operations: (1) cast preparation operation **200** that may be carried out outside the molten metal additive casting system and before the input cast is mounted on the molten metal additive casting system; three main operations that are carried out on and by the molten metal casting system - (2) build area preparation operation **208,** at which the building environment is adjusted to receive the input cast; (3) input cast positioning and alignment operation **220;** and (4) additive casting processing operation **222.** A final main operation - (5) post processing operation **230,** may be carried out outside of the molten metal casting system.

The following operations may be included in the cast preparation operation **200:**
In operation **202:** if needed, the input cast is cleaned by, e.g., removing oils, sand blasting and the like. The cleaning may be performed by a stand-alone, dedicated cleaning station. If the input cast is received, e.g., from the mass-production foundry, the mass-production foundry may perform the cast cleaning operation. If received in a packaging, the input cast is unpacked.

In operation **204:** a digital representation of the input cast and the final part is received. For example, a CAD file depicting the input cast, the final part and the portion to be additively manufactured. If the digital representation is not available or if there is a need to verify its accuracy or otherwise recreate it, the input cast is imaged and a 3-dimensional digital representation is created. Input cast imaging may be performed by a stand-alone, dedicated imaging station. Input cast imaging may be performed by known in the art imaging techniques.

In operation **206:** assessing or receiving material composition and properties of the input cast. The material composition and properties may be received from the input cast manufacturer. Alternatively, measurements of material composition and properties are carried out. For example, if a low-volume or mid-volume production is planned, one input cast may be physically analysed and consequently, disposed of. The assessment of input cast material composition and properties may be performed by a stand-alone, dedicated analysis stations and labs. The assessment of input cast material composition and properties may be performed by known in the art imaging techniques.

In build area preparation operation **208,** several operations relating to the build plan and environment are carried out. The build plan is generated in operation **210** by a build plan generating unit incorporated in the molten metal additive casting system or in communication therewith. The information obtained in operations **204-206** is used in the generation of the respective build plan.

Compared to the generation of a build plan for a complete part, the build plan for hybrid casting by molten metal additive casting must address two main issues: (1) support and anchoring (operation **212),** and (2) adjustment, if needed, to units and subsystem of the molten metal additive casting system (operation **214).**

For example, if the input cast includes recess, holes, passageways or any other hollow portion, adequate support is needed.

The input cast must be secured and affixed to an anchor to thereby prevent undesired movement of the input cast during additive casting. The build table may serve as such an anchor. In some embodiments, were several input cast are to be nested, a dedicated build plate may be created to anchor the nested input cast to the build table. In other embodiments, suitable for receiving large input cast, the placement of the input cast on the build table is designed to, e.g., ensure adequate reach of all of the units and subsystems of the additive casting system to the relevant portions of the input cast. In yet other embodiments, suitable for receiving very large input cast, an adjusted build area is created on the input cast and casting system units and subsystems are rearranged to adequately operate on the adjusted build area.

Elevation of the build area may be carried out by lowering the build table or by elevating respective units and subsystems of the casting system.

For simplicity of explanation, aspects of the present disclosure will be described with reference to the processing of a single input cast on the build table of the additive casting system, the build table is lowered as needed during additive processing.

In the fabrication of a complete part by molten metal additive casting, the first production layer (layer 0) typically comprises only a mold region that is deposited on the build table. In hybrid casting, the first layer (layer 0) comprises both object region and mold region, and constitutes the interfacing region.

In some embodiments, a support structure is required to thereby support the first production layer and the build area to be generated. Such a support structure may be created using e.g., sand.

In other embodiments, e.g., for the fabrication of hybrid cast **10** (shown in **Fig. 1****),** the upper surface of the generic part **16** serves as the build area and supports the first production layer. For simplicity of explanation, aspects of the present disclosure will be described with reference to the fabrication of hybrid cast **10** (shown in **Fig. 1****).**

In operation **222** of additive casting processing, special attention to the interface between the input cast and the production layers - the mold regions and object regions - is required. The additive casting processing starts with operation **224** - preparing an interface mold region. In the illustrated use case, an in-situ mold construction is employed, and mold material is deposited onto the build area. Other mold constructions techniques - in-situ as well as ex-situ, can be implemented.

In some embodiments, surface treating is performed, for example, mechanically treating the portions of input cast **100** (shown in **Fig. 1****)** by milling, grinding or polishing; providing chemical treatment (e.g., coating with an appropriate adhesive), and the like.

When the interfacing mold region is deposited and sufficiently cured (partially cured or fully cured), the interface zone of the input cast is heated and remelted. The heating and remelting depth may be in the range of 5-150 mm. If needed, cast property modifying powder may be added to the melt zone that is created in the interfacing object region, e.g., to compensate for cast property modifications initiated by reheating and melting.

In operation **228,** upon completion of the processing of the interface mold region and the interface object region of the input cast, the fabrication continues by depositing the first object region of the specific part (part **18** shown in **Fig. 1****).** The fabrication of the additional production layers continue until completion.

Upon completion of additive casting processing, post processing operation **230** takes place. The mold structure is removed (operation **232)** and optional finishing may be performed (operation **234).**

**Fig. 3a** is a schematic, not-to-scale illustration of an additive casting system **30** according to the embodiments of the present disclosure. Additive casting system 30 implements a coordinated dual production assembly configuration comprising metal processing assembly **112** and mold production assembly **126.** Each assembly operates under control of system controller **136** and is equipped with a dedicated X-Y-Z-R motion system **134.** The motion systems may be implemented as large 6-axis jointed-arm robots or gantry systems capable of handling heavy objects, enabling precise positioning and movement of their respective assemblies. Metal processing assembly **112** handles metal deposition and processing operations, while mold production assembly **126** manages mold construction and preparation, with their operations temporally and spatially coordinated to build each production layer.

System Controller **136** is also shown in **Fig. 3a****.** System Controller **136** may be implemented digitally or via one or more analog control systems. The system controller **136** may contain a processor with executable modules for controlling assemblies **112, 126** and units **114, 116, 118, 120, 122, 124, 128, 130, 132** and **134.** Executable modules cover surface-heating **138,** surface melting **140,** metal deposition **142,** powder introduction **144,** motion **146,** inert environment **148,** mold construction **152, 102,** and surface and walls finishing **154.** Executable code contains algorithms and routines needed to carry out the specific actions outlined by a specific building plan of additive metal casting according to the present invention.

The system Controller **136** also receives sensor and feedback data from various sensors and detectors **122.** Sensors **122** may include sensors for temperature, flow rate, position, speed, pressure, cumulative mass, and material composition. Sensors **122** may include other sensors such as infra-red (IR) cameras, visible-wavelength cameras, weight sensors (e.g., rod weight sensor and/or build table weight sensors), stereometric vision sensors (e.g., for measuring layer thickness), distance sensors and the like. The system controller **136** may also receive operator input (not shown) in order to precisely set up and control an additive metal casting process according to the present invention. The System Controller **136** relies on the build plan (not shown in **Fig. 3a**) for data, details, and parameters governing the additive casting operation.

System Controller **136** controls and coordinates the operation of the metal processing assembly **112** and mold construction assembly **126** to prepare the interfacing region and produce a stack of production layers, each with a mold region and an object region.

In each production layer, the mold construction assembly **126** fabricates the mold region, thereby defining the shape and boundaries of the respective object region. When the mold region of a specific production layer is ready, the metal processing assembly **112** produces the respective object region. The mold regions of successive production layers constitute the mold-in-progress **352,** and the object regions of successive production layers constitute the cast-in-progress **356** held within in mold-in-progress **352.** The principal operations of mold region construction and object region processing are carried out interchangeably, each at different thermal conditions and protective conditions.

Mold-in-progress **352** is configured to withstand the expansion and shrinking forces exercised by cast-in-progress **356** during metal processing of successive production layers.

It is to be understood that the construction and operation of the mold construction assembly **126** do not form part of the present disclosure and, therefore, are not described herein in detail, except to note the following: the production of the mold regions may be performed in-situ or ex-situ. In various in-situ embodiments, mold production assembly **126** comprises a mold constructor **128.** Mold constructor **128** may comprise - or be in fluid connection with a mold material reservoir and a mold depositor (not shown in **Fig. 3a**). In other embodiments, mold production assembly **126** receives mold materials from remote storage. In an ex-situ embodiment, mold construction assembly **126** receives from a remote source fabricated mold regions and/or mold frames assigned with multiple production layers and places them in the appropriate location according to the build plan. Mold materials may include mold materials in paste form, powder form, granular form, slurry form, and mold materials mixed with binders, releasing agents, activating agents, UV absorbing particles, crosslinking agents, heat-absorbing particles, or other additives to facilitate mold fabrication and use. According to embodiments of the present disclosure, mold materials include, but are not limited to, ceramics (e.g., zirconia, alumina, magnesia, etc.), sand, clay, metallic powders, and any combination thereof.

In some embodiments, mold construction assembly **126** further comprises a mold surface and wall finish and treatment unit including, but not limited to, drying, curing, milling, grinding, and polishing components, for example, for finishing the inner walls of the mold regions (cavities) before metal deposition, for semi-hardening or hardening the mold regions prior to metal deposition.

In some embodiments, the mold surface treatment unit is capable of treating the upper surface of the mold region of the current production layer, for example, before constructing the mold region of a consecutive production layer.

PCT Publications Nos. WO2023/275857 filed April 14, 2022, WO2023/166506 filed March 1, 2023, and WO2024/100644 and WO2024/100642 filed Nov. 9, 2022 disclose additional information regarding the production of mold regions, and are incorporated herein in their entirety.

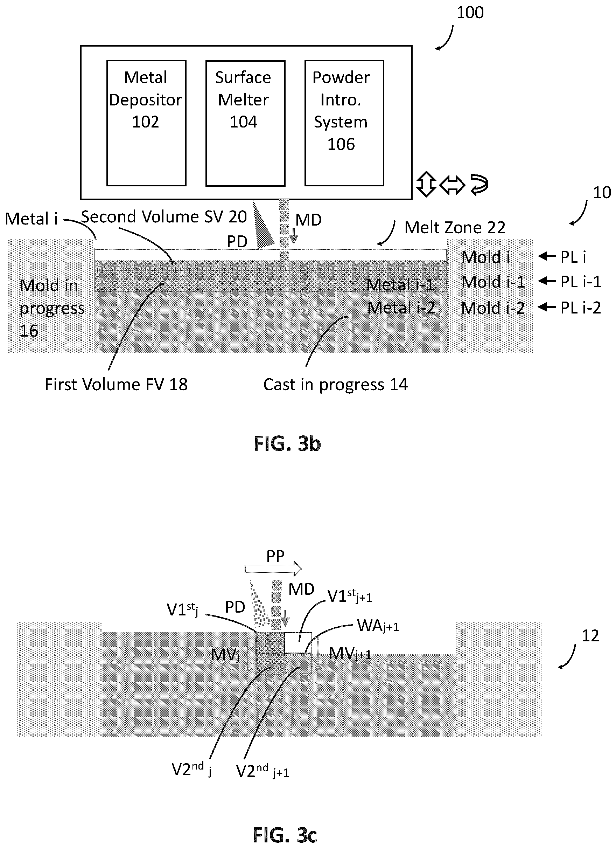

Metal processing assembly **112** comprises at least a metal depositor **120,** surface melter **116,** and powder introduction system **124.** Optionally, Metal processing assembly **112** comprises also a surface heater 114. The configuration and operation of metal processing assembly **112** will be described with reference to **Figs. 3b-3c****.**

An example of production scenario **A** is illustrated in **Fig. 3b****,** illustrating the production of production layer **PLᵢ** by metal processing assembly **112.** An interim production phase of production layer **PLᵢ** is shown - after the mold layer **Moldᵢ** is constructed and while producing metal layer **Metalᵢ.** Metal layer **Metalᵢ** is produced on top of cast-in-progress **356.** Cast-in-progress **356** is positioned within a mold-in-progress **352** on a build table (not shown). Mold-in-progress **352** is aimed at shaping cast-in-progress **356** and bounding a Melt Zone **MZ,** generated in the cast in progress **356,** from slipping over.

During operation, metal processing assembly **112** generates and processes voxels of molten metal - designated as Melt Zones **(MZ)** - through a coordinated two-stage process. During processing of the metal layers, elements **120, 116** and **124,** are physically located proximate to the upper face of cast-in-progress **356** and operate in synchrony. Surface melter **116** creates a First Volume (**FV**) by melting a section of the previously solidified metal in the cast-in-progress **356.** Concurrently, metal depositor **120** adds a Second Volume (**SV**) of new molten metal to the First Volume. These volumes combine to form a Melt Zone **(MZ)** having at least a predetermined minimum volume required for proper metallurgical processing. At the interim production phase illustrated in **Fig. 3b****,** approximately half of the Second Volume **SV** has been added to the First Volume **FV,** demonstrating the progressive formation of the Melt Zone.

Metal depositor **120** comprises source melting heater/s (not shown in **Fig. 3b**) and input metal source (not shown in **Fig. 3b**), and is arranged to drip molten metal (e.g., release free-fall molten metal discrete drops, a continuous stream of molten metal drops or a flow of molten metal). A few free-fall molten metal drops **MD** are shown in **Fig. 3b****.** The newly added molten metal **MD** constitutes the Second Volume **SV.** Metal depositor **120** may provide molten metal onto the upper surface of cast-in-progress **356** at a single deposition location, at several deposition locations, or continuously while scanning the upper surface of cast-in-progress **356.**

Surface melter **116** comprises heater/s (e.g., induction heaters, plasma heaters, laser/s) arranged to heat and melt the previously solidified section of the cast-in-progress **356** before, during, and after the addition of molten metal **MD.** For example, Surface Melter **116** is arranged as a planar coil scanning over or dwelling above the upper surface of cast-in-progress **356.** In some embodiments, surface heater 114 (e.g., induction heaters, plasma heaters, laser/s)) provide additional heat before, during and after the operation of surface melter **116.** After the First Volume **FV** and Second Volume **SV** accumulate into the complete melt zone **MZ,** the melt zone **MZ** is maintained in a molten state for a predetermined duration.

Powder introduction system **124** is arranged to provide an allocated amount of cast-property modifying powder into melt zone **MZ.** The provision of the allocated amount of cast-property modifying powder may be realized as a single dose provided in a single provision site or multiple doses provided at a single provision site or multiple provision sites. A provision of a single dose of cast-property modifying powder - out of a series of, e.g., three - is illustrated.

**Fig. 3c** illustrates another example of production scenario **B** implemented by metal processing assembly **112** shown in **Fig. 3b****.** In operation, during the processing of the metal layers, elements **120, 116,** and **124** are physically located proximate to the upper face of cast-in-progress **356** and travel thereon along a processing path **PP.** While traveling, a series of voxels **MV** are generated, each attributed by remelting a first volume **V1^{st}ⱼ** of previously solidified metal and adding a second volume **V2^{nd}ⱼ** of new molten metal MD. Powder dose **PD** is provided to the molten metal voxel **MVj.**

In each production scenario, the allocated amount of cast-property modifying powder corresponds to the volume of the melt zone, attributed to the first volume and second volume. The volume of the melt zone must be equal to or above a minimum volume.

**Fig. 3c** further illustrates the next voxel to be processed, **MVⱼ₊₁.** **Fig. 3c** depicts working are **WAj+1-** a section of the upper face of cast-in-progress **356** that will be melted by surface melter **116** (giving rise to first volume **V1^{st}ⱼ₊₁**) and onto which the new molten metal drops will be added **(V2^{nd}ⱼ₊₁** ) to thereby generate molten metal voxel **MVj+1.**

The term "voxelated" is used herein to denote the ability of the embodiments of additive casting presented in this disclosure to process a specific voxel of molten metal. Voxelated metal processing is feasible due to the processing of the cast-in-progress - the previously solidified metal and newly added metal - within a mold cavity - the mold-in-progress.

The specific voxel under processing resides in a specific section of a specific production layer ("working area"). Upon processing the specific working area, a melt zone is created by heating up and melting the previously produced metal in the working area. The melt zone may further comprise the newly-added molten metal, e.g., dripped into the melt zone created in the working area by the depositor. The volume of molten metal residing in the melt zone of a specific working area is denoted "molten metal voxel" or "voxel".

The term "working area" is used herein to denote the specific section of the upper face of the currently processed production layer below the metal processing system. For small-scale production layers - e.g., production layers having an object region with a length and a width at the same geometrical dimensions as the surface heater/s of the metal processing system, the entire production layer may constitute a "working area". In large-scale production layers - e.g., production layers having object regions with lengths and widths larger than the geometrical dimensions of the surface heater/s of the metal processing system, the processing of the complete production layer involves processing multiple working areas in that production layer.

In some embodiments of the present disclosure, the processing of the multiple working areas in the production layer involves traveling over the production layer in a continuous scanning pattern or discrete scanning pattern.

In continuous scanning patterns, the working area comprises a dynamically moving area that follows the processing assembly's movement. This dynamically moving working area is characterized by dimensions and operating parameters used for process planning and process control. For example, the dimensions of the heating area, the processing depth (combining layer height and remelt depth), the time of heating, and the deposition period. The continuous scanning pattern features the progressive movement of the melt zone with continuous overlap between adjacent working areas, facilitating continuous metal deposition and continuous or discrete powder delivery. This pattern may operate with constant or varying travel speed, continuous heat input, and synchronized powder delivery.

Discrete scanning patterns utilize distinct, stationary working areas where processing occurs, with clear boundaries between adjacent working areas. The dimensions of these discrete working areas are primarily determined by the fixed geometry of the surface heater and the processing depth. In this pattern, complete processing of one area occurs before moving to the next, involving distinct start/stop operations. The discrete pattern enables individual parameter control and distinct process optimization for each working area, operating through defined dwell times at each location and discrete powder delivery events.

Thus, the controller may further be configured to implement a continuous scanning mode wherein the metal processing assembly moves continuously along a processing path while maintaining a dynamic melt zone; and a discrete scanning mode wherein the metal processing assembly processes distinct working areas sequentially, wherein the controller selects the scanning mode based on at least one of part geometry, thermal requirements, or material properties.

The controller may be further configured to adjust scanning parameters in response to real-time thermal feedback; maintain minimum melt zone volumes specific to each scanning mode; coordinate the timing of powder introduction with the selected scanning mode; and manage thermal conditions at boundaries between adjacent working areas.

Embodiments of the present disclosure will be further illustrated with reference to the continuous scanning pattern of the metal processing system (molten metal depositor, surface heater, and powder introduction unit), as well as a discrete powder introduction pattern.

The term "melt zone" is used herein to denote the change in the working area under the influence of the molten unit depositor, the surface heater/s, and the powder introduction unit - aimed at generating a melt zone of at least the minimum volume or above. The volume of the melt zone in the working area is growing under the combined influence of the molten unit depositor and the surface heater/s up to a desired critical Minimum Volume **MV** (the voxel), such that the powder introduction unit delivers the powder into the voxel. Put differently, the critical minimum volume of molten metal (the voxel) is used for process planning, while the melt zone volume is a measure that dynamically changes during processing. The development of the melt zone may be sensed, monitored, and controlled in real time.

The production scenarios illustrated in **Figs. 3a-3c** are performed under inert environment conditions facilitated by an inert environment unit **118** and/or inert environment unit **132** or both.

Inert environment conditions for metal processing may be realized by a global inert environment unit **132,** configured to facilitate inert conditions, e.g., in a production chamber, a movable inert environment unit **118** accommodated in the metal processing assembly **112** and configured to facilitate inert conditions, e.g., proximate to the melt zone, or a combination thereof.

In various embodiments, surface melter **116** comprises one or more induction heaters, plasma heaters, electric resistance heaters, and torch heaters. Embodiments of the present disclosure will be further described with reference to a surface melter comprising induction heater/s.

In various embodiments, molten metal depositor **120** comprises crucibles, remote molten metal reservoirs, wire or rod stock for melting, powder for melting, or combinations thereof.

Embodiments of the present disclosure will be described with reference to input metal in the form of metal rods, e.g., certified grey cast iron rods. Using metal rods, particularly certified grey cast iron rods, as the source material for additive casting provides significant technical advantages over powder-based approaches. The use of metal rods ensures complete metallurgical integrity as the deposited material maintains the exact composition and properties of the source material - what is melted is what is deposited, with no intermediate processing steps that could affect material properties. This approach leverages established foundry-certified source materials, providing full traceability, verified material properties, and reliable chemical compositions that meet industry standards. The melting process itself benefits from enhanced control when using metal rods. The system can precisely control the melting of a small volume at the rod tip, maintaining a consistent temperature. The vertical feeding arrangement enables gravity-assisted droplet formation, while rod rotation ensures even melting.

In the context of hybrid casting, the same foundry-certified source material used for casting the input part may be used for the corresponding additive casting section.

During additive casting processes according to the present disclosure, the metal processing assembly **112** and mold construction assembly **126** described above perform motions relative to cast-in-progress **330.** Relative movement includes movement in the x-y plane as well as in the z-direction (per coordinate system **360)** and has degrees of freedom in horizontal motion **361,** vertical motion **363,** and rotation **365.** According to the present disclosure, relative motions can be accomplished by moving build table **316;** by moving one or more of movable units **112** and **126;** and/or by a combination of movements of build table **316** and movable assemblies **112** and **126.** Typically, for casting large, unwieldy, and heavy objects, build table **316** may be limited to providing relative motion in the z-direction. In some embodiments, the build table **316** is moved between production layers. In some embodiments, the build table **316** is moved between the construction of the mold region and the production of the object region of the current production layers. In some embodiments, the x-y relative motion may be accomplished by moving assemblies **112** and **126** and not build table **316.** In related embodiments, the movement of various units relative to a cast-in-progress is done with the assistance of one or more motion systems **134.** Carrier **335** is used to move Input cast **332** and the cast in progress **330** as needed.

In some embodiments, which can be combined with other embodiments described herein, system **30** further comprises a production chamber (not shown in **Fig. 3a****)** encompassing at least the movable build table **316** or the build area **358.** The production chamber may comprise one or more chamber heaters, and Controller **136** may be operative for heating and maintaining an environment of the build area at a constant chamber temperature. For example, for grey iron, the constant chamber temperature may be in the range of 500 to 750 degrees centigrade. In some embodiments, which can be combined with other embodiments described herein, Controller **136** may be further operative to heat the production chamber to a first chamber temperature for mold region construction and to a second chamber temperature, different from the first chamber temperature, for object region production.

Hybrid casting with voxelated additive casting involves the preparation of the interfacing region - interfacing mold region as applicable and interfacing object region.

Turning back to **Fig. 3a****:** Hybrid cast-in-progress **330** is shown. Hybrid cast-in-progress **330** is composed of a generic part **332** and a specific part **334.** Specific part **334** is shown in an interim fabrication phase: the specific part is shown in its production structure - with the respective mold in progress **352.** The interface object regions **354** (input cast) and cast in progress - specific part **356** are shown. Metal deposition in two production layers is complete. The mold in progress **352** of the third production layer including the lastly-constructed mold region - is complete.

For ease of explanation, the interface object regions **354** (input cast) and **356** (specific part) are shown as separated. However, the boundaries shown in Fig. 3a will not exist upon processing. The specific part **334** will be fully bonded to the generic part **332.**

For the preparation of the interface region **354** (shown in **Fig. 3a****),** metal processing assembly **112** may be operated without operating metal depositor **120** and without adding new molten metal. In some embodiments of the present disclosure, interface region **354** is processed by heating a portion of a surface of generic part **332** up to melting: metal processing assembly **112** scans the interface region **354** and surface melter **116** melts the interface region **354.** In other embodiments of the present disclosure, interface region **354** is processed by heating up to melting and with the provision of at least cast property modifying powder: metal processing assembly **112** scans the interface region **354,** surface melter **116** generates a melt zone in the interface region **354** and powder introduction unit **124** provides allocated amounts of at least cast property modifying powder into the melt zone. In such an operating scenario, the volume of the melt zone is equal or above the minimum volume to thereby facilitate cast property modifications.

**Fig. 3a** further depicts the systems and units needed for carrying out cast preparation (operation **200** shown in **Fig. 2****)** and build area preparation (operation **208):** Input part scanner **302** is used for generating digital part representation. Input part cleaner **306** carry out cleaning operations such as oil removing and sand blasting. Input part analyzer **304** is used for assessing input part's material composition and properties. Build plan generator **308,** realized as a dedicated system or incorporated/hosted by system controller 136, is generating the build plan to be carried out by additive casting system **30.**

Each of Input part scanner **302,** input part cleaner **306,** input part analyzer **304** and build plan generator **308** may be implemented as a component of system 30 controlled by system controller 136 (in-situ configuration), or as a separate unit (ex-situ configuration), optionally in data communication with system controller 136.

An experiment of reconstructing a cast part employing the hybrid casting method and system according to embodiments of the present disclosure and related measurement results will now be discussed.

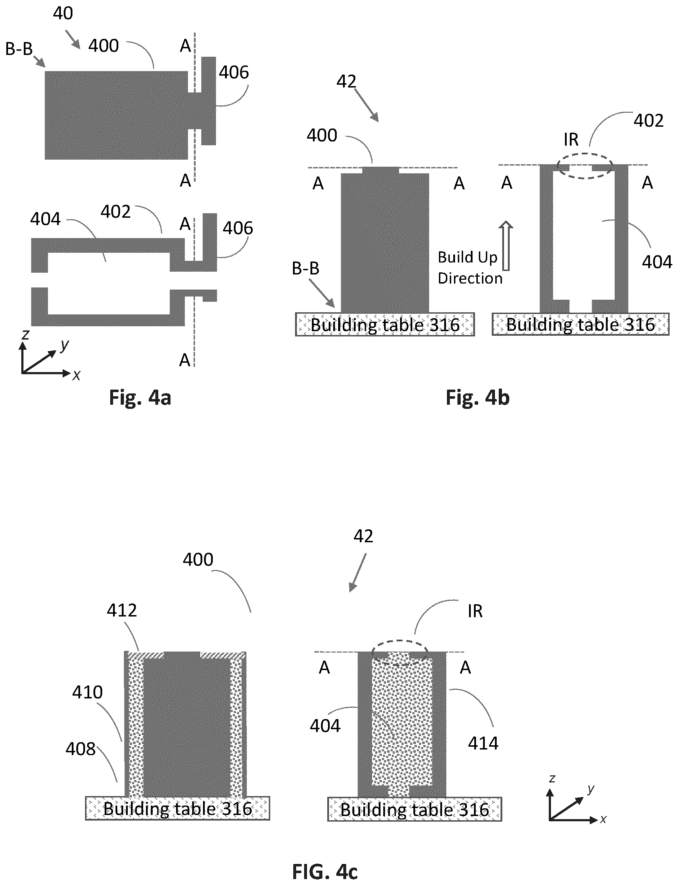

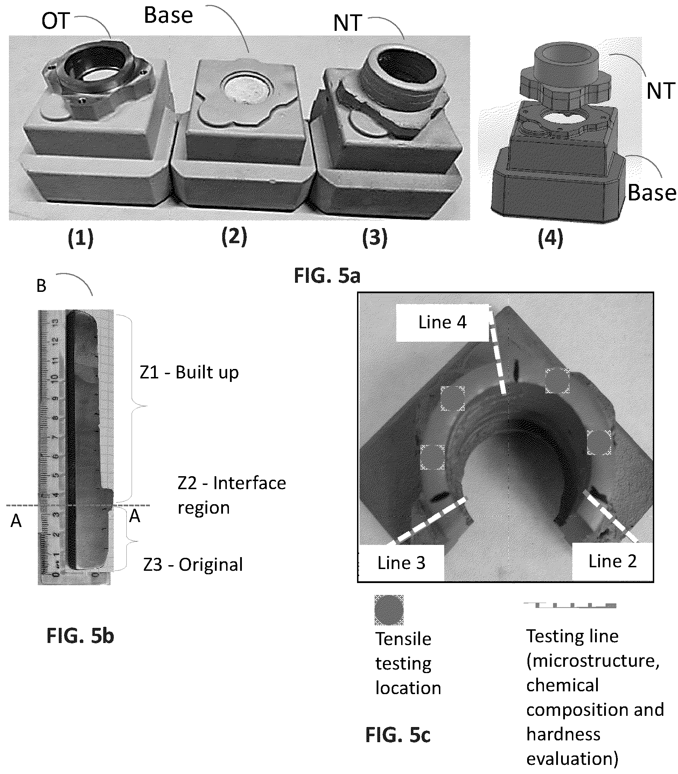

**Figs. 4a****-e** depict various stages of **Experiment 1** of reconstructing a cast part employing the hybrid casting method and system according to embodiments of the present disclosure. **Figs. 5a-5f** depict related experimental information and measurement results.

**Fig. 5a** is a pictorial illustration of **experiment 1** and depicts, in **Fig. 5a****(1),** a fully made grey cast iron gear box having an original turret **OT.** **Fig. 5a****(2)** shows a base that is created after the original turret **OT** was milled of. The hybrid grey cast iron gear box having a new turret **NT** is shown in **Fig. 5a****(3).** **Fig. 5a****(4)** is an exploded view of a 3D model of the base and the new turret NT.

**Experiment 1** will be described with reference to **Figs. 4a-4e** and the experiment results shown in **Figs. 5b-5f****.**

**Fig. 4a** schematically illustrate an original hollow box **40** made of grey cast iron, of about 25x12x8cm in outer size. **Experiment 1** involves the use of a fully-made cast after post-processing (after fettling, shot blasting, machining, and surface coating). Original section **406** was removed along plain **A-A.**

A side view **400** is shown (after the original turret is removed). A cross section **402** is further shown, with a hollow volume **404.** Section **406** is a radial hollow disk of about 14cm outer diameter and an inner diameter of 5cm. Section **406** extends to the side of box 40. The minimal thickness of the walls of box 40 near section **406** is 6mm. Original box **40** is shown in **Fig. 4a** in the position of its intended use. **Experiment 1** revolves around the reconstruction of section **406.**

**Experiment 1** exemplify aspects of use cases (1)-(3): box **40** - a gear box, was manufactured at high-production volume using traditional casting. The addition of the recreated section **406** was performed a long time after the manufacturing of box **40** (the exact manufacturing date is unknown; original box 40 was taken from the existing inventory of cast parts). The input iron source for reconstructing section **406** was different from the input iron used for the casting of box **40.** Six substantially identical boxes **40** were produced and investigated in **Experiment 1** (one of which is shown in Fig. 5a(3)), out of which, one was cut after its processing and used for measurements.

A successful reconstruction of section **406** demonstrates the validity and feasibility of use cases (1)-(3). The following success criteria were expected: (i) Full adhesion and smooth transition between the original metal and the built up metal; (ii) Dimension accuracy compatibility of section **406;** and (iii) No deformation of the original model: maintaining the geometry of box **40** especially near the interfacing region of section **406.**

An additional objective of **Experiment 1** was the investigation of metallurgy aspects: (iv) Demonstrate control over heating, remelting and cooling of thin box walls at the interfacing region between the original metal and the built up section.

The following operations were carried out for reconstructing section **406:**
A preliminary operation of removing original section **406.**

Operation **(1)** that corresponds to operation **202** of **Fig. 2****:** cleaning and removing oil. Respective moving parts such as supporting rings, pins, and brass housing were removed. Operational **(1)** was carried out twice - before and after removing original section **406.**

Operation **(2)** that corresponds to operation **203** of **Fig. 2****:** scanning box **40** and obtaining a three-dimensional digital representation (3D model). Known in the art techniques were used to create the 3D model in order to reflect the cast body and critical features.

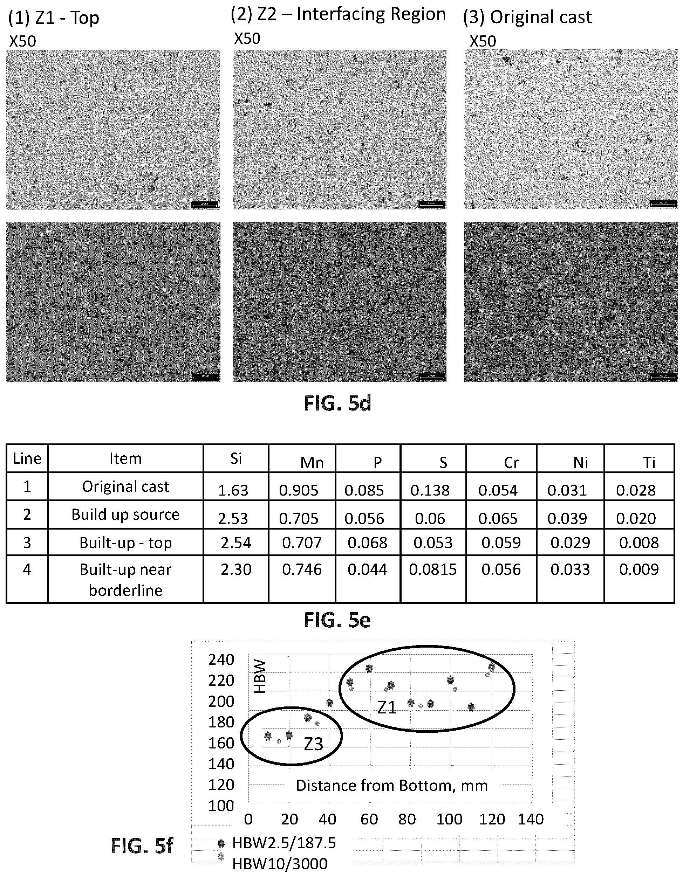

Operation **(3)** that corresponds to operation **206** of Fig. 2: assessing the material composition of the original cast and the iron source for the built up. The Chemical composition results, measured using Hitachi Spectro Foundry Master, are summarized in Lines 1 and 2 in **Fig. 5e****.**

Operation **(4)** that corresponds to operations **210, 212** and **214** of **Fig. 2****:** build plan generation: at a first step, the built up direction was selected. As illustrated in **Fig. 4b****,** box **40** was placed at a 90deg. rotation in the z-x plane.

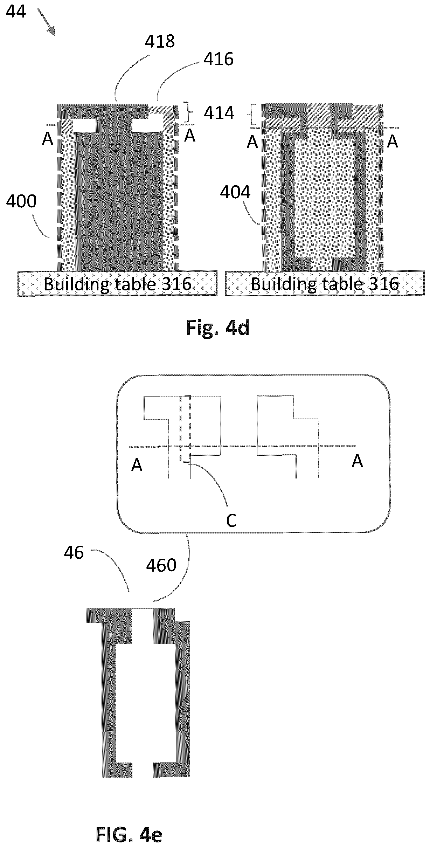

At another step, the interfacing region **IR** is planned. The thickness of the walls of box **40** at the respective interfacing region **IR** area were about 6mm thick. Thus, the maximal width of the interfacing region in **Experiment 1** was 6mm. The interfacing region **IR** has a ring shape and is wrapped in a support element in its inner hollow volume and at its periphery, as shown in **Fig. 4d****.** The metal region height planned for **Experiment 1** was in the range of 2-8mm for each production layer. Surface heaters were control to provide the interfacing region with heating sufficient to create a melt zone in the interfacing region - as well as during metal deposition, with a melt zone depth in the range of 2-10mm.

At another step, support mold regions were determined and plan. **Fig. 4c** schematically illustrate an exemplary structure **42** including the original box **40** (without section **406)** and a support structure having three support elements, **408, 410** and **412.**

The complete support structure comprises three distinct but complementary molding elements: (1) Enclosure element **408:** Forms the outer containment structure. (2) Internal support element **410:** Comprises mold material filling both the hollow volume **414** and the space between box **40** and enclosure **408,** providing uniform support. (3) Interface support element **412:** defining the build plane for the interface region and the buildup.

In the example shown, support section **408** was selected to be made of the same mold region material as the mold elements that are used for the additive buildup of section **406.** Support element **410** was made of dry sand that was provided within the hollow volume **414** and between the outer side of box **40** and the enclose support **408.** Support element **412** is made of the same mold region material used in the additive buildup process. Embodiments of the present disclosure are not limited by this example material selection.

Thus, the mold regions for the buildup metal were planned to be constructed as a continuation of support elements **410** and **412.**

These support elements work together to: (1) provide structural stability during processing, (2) enable proper formation of the interfacing region, and (3) maintain geometric accuracy of the final part.

Further in operation **(4),** the build plan for the buildup - the new section **406** - was generated, e.g., using the techniques described with reference to **Figs. 3a-3b****.**

Operation (5) illustrated in **Fig. 4d****,** corresponds to operation **222** of **Fig. 2****:** as planned, hybrid cast **44** was fabricated by constructing buildup **414:** the interface region **IR** (shown in **Fig. 4c****)** was heated and remelted, and then, additively, production layer after production later, each mold region was fabricated and molten metal was deposited into the respective mold region. During interfacing region preparation and metal deposition, the surface temperature was maintained in the range of 1220-1250 deg. Celsius. During surface heating and metal deposition, local inert environment was maintained by Nitrogen injection. The mold regions (element **416** of **Fig. 4d****)** were constructed using a ceramic-based two-zone mold structure having a smooth metal-facing surface.

At the end of operation **(5),** hybrid cast was enveloped within a mold-object structure. Upon mold removal, in operation (6) (operation **232** of **Fig. 2****),** the hybrid cast **46,** shown in **Fig. 4e** and also in enlarged window **460,** was ready for measurements.

Operation **(7)** - measurements: 4 coupons **C** were taken from different sites of the ring-shaped area of part **460** of Fig. 4e, as depicted in **Fig. 5c****.** A picture of one such coupon **C** is shown in **Fig. 5b****.** Each coupon **C** includes three zones: **Z3** - a portion of the original cast, **Z2** - a portion of the interfacing region and **Z1** - a portion of the newly-added buildup. The coupons underwent an optical microscope review with X50 enlargement - typical microstructure images are depicted in **Fig. 5d. Fig. 5e** depicts the results of the chemical composition assessment and the results of a HBW ("Hardness Brinell, Wide-Range") hardness test 2.5/187.5 and 10/3000 (performed by applying a load of 2.5 and 10 kilograms-force (kgf) by a ball with a ball diameter of 187.5 and 3000mm, respectively). Geometry and shape information was also measured.

Results: the resultant interfacing region is of a few millimeter width, as planned. As expected, the thin wall of the original ring-like interfacing region were melted, nevertheless, at large the wall maintained its shape due to being bound by the support element. As explained with reference to **Fig. 4c****,** this thin wall was supported from below by dry sand. Supporting the thin wall from below with ceramic having smooth metal-facing side may improve shape correctness and compatibility. Geometrical measurements reflect sufficient dimension accuracy and compatibility of the hybrid cast with the original cast, measured after sand blasting.

A complete bonding is achieved among the built-up metal regions, and between the original metal and the built-up metal. No Oxide residues were observed between the original metal and the built-up metal, as well as among built-up regions.

The optical inspection revealed no high-porosity, no cracking or other visible defects in all three zones: the built-up **(Z1),** the interfacing region **(Z2),** and the original cast away from the interfacing zone **(Z3).**

The surface of the original casting near the interfacing region (**Z1**-top) exhibits light Heat Effected Zone, Yet, no severe damage to the original casting features is observed.

The microstructure analysis - represented by typical images shown in **Fig. 5d****,** further revealed that the built-up zone **(Z3)** is characterized by a fully pearlitic matrix, attributed by the relatively slow cooling rate. Fine graphite formation was observed in the built-up zone **(Z1),** in alignment with the known properties of the built-up input source (the carbon concentration of the source iron is not included in **Fig. 5e**).

In the narrow interfacing zone **(Z2)** and the top area of **Z3,** remelted original metal shows mostly A- type graphite distribution with pearlitic / ferritic matrix, reflecting partial pearlite decomposition caused by repeating thermal cycles. At large, the remelted metal maintained its properties compared to the original material (**Z3**): A-type graphite distribution with full pearlite matrix.

The chemical composition analysis (shown in **Fig. 5e****)** revealed some mixing between the original metal and the newly-deposited material in the narrow interfacing zone. Yet, at large, each of the materials maintained its composition at the other zones.

The hardness measurement results shown in **Fig. 5f** demonstrate the expected difference between the respective metal of the input part and the newly-added source metal.

**Experiment 1** shows that the two metals, though different in their properties, are well combined. Full adhesion and smooth transition between original metal and the builtup metal were demonstrated. Dimension accuracy compatibility of the reconstructed section **406** was achieved. The geometry of box **40** especially near the interfacing region of section **406** was maintained at large.

It is to be understood that the construction of hybrid cast according to embodiments of the present disclosure is not limited to the exemplified construction scenarios. For example, in the case shown in **Fig. 4c****,** enclosure **408** and support element **410** made of dry sand are constructed from the building table upward - however, this is not necessarily so. In some embodiments, the mold support region may have only two mold region zones such that the enclosure zone is constructed at or near the interfacing region (this embodiment is not shown in **Fig. 4c****).** Further, in the example shown in **Fig. 4c****,** the support element **410** is constructed from dry sand that fills the entire hollow volume **414** - however, this is not necessarily so. Further yet, the mold support for the interfacing region may be constructed only atop of a portion of the original cast.

Embodiments of the present disclosure were described with respect to in-situ fabrication of the mold regions using a ceramic-based paste. In other embodiments - ex-situ mold construction embodiments, mold constructor **322** receives fabricated mold regions and/or mold assemblies from a remote source, assigned with multiple production layers.

Embodiments of the present disclosure are not limited by the type and form of mold material. Mold materials include mold materials in paste form, powder form, granular form, slurry form, and mold materials mixed with binders, releasing agents, activating agents, UV absorbing particles, crosslinking agents, heat-absorbing particles, or other additives to facilitate mold fabrication and use. According to embodiments of the present disclosure, mold materials include, but are not limited to: ceramics (e.g., zirconia, alumina, magnesia, etc.), sand, clay, metallic powders, and any combination thereof.

It should be noted that a single input part may be received, as well as multiple input parts. The multiple input parts may be nested as part of cast preparation operation **200.** In some embodiments, the input cast are placed on the build table of the additive casting machine. In other embodiments, the build table of the additive casting machine may be fitted to e.g., very large input cast.

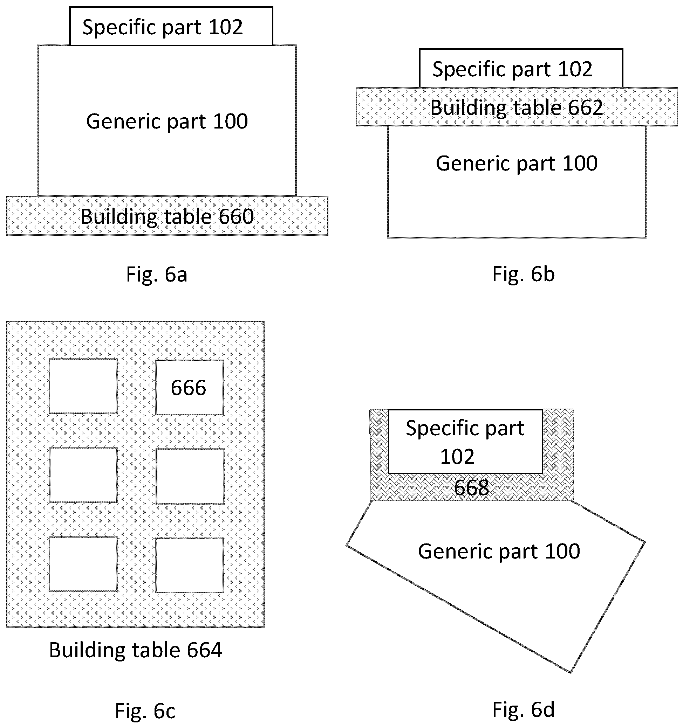

The hybrid casting system according to embodiments of the present disclosure can accommodate various build plate configurations and mounting scenarios to suit different manufacturing needs. As illustrated in **Figs. 6a-6d****,** several approaches for supporting and positioning the input cast during additive processing are possible.

In a first configuration, shown in **Fig. 6a****,** a standard build plate **660** supports the generic part **100** and provides the build area for constructing the specific part **102.** This configuration is suitable for small to medium-sized input parts that can be readily positioned on the build table of the additive casting system. This production scenario is illustrated in **Fig. 3a** - the placement of generic part **332** on build plate **613.**

An alternative configuration is illustrated in **Fig. 6b****,** where a specialized build plate **662** is designed to accommodate the geometry of generic part **100.** Build plate **662** may include custom fixtures or supports specifically engineered to secure the input cast in the optimal position for the additive build process. This approach ensures precise alignment and stability during processing while potentially allowing for better thermal management through specialized plate designs.

For volume production scenarios where multiple input casts need to be processed simultaneously, a nested configuration as shown in **Fig. 6c** may be employed. Build table **664** accommodates multiple input casts arranged in an optimized layout 666, enabling efficient batch processing while maintaining proper spacing and access for the metal processing and mold construction assemblies.

Another production approach is depicted in **Fig. 6d****,** where no traditional build plate is utilized. Instead, the interfacing mold region **668** itself creates the build plane for the additive process. This configuration is especially advantageous for very large input parts that cannot practically be mounted on a conventional build table, or for field operations where the additive casting system must be brought to the workpiece rather than vice versa. In such scenarios, the input cast (generic part **100)** can be secured by dedicated holding units (not shown) that maintain the part in the optimal position relative to the build direction. The holding units may comprise adjustable supports, brackets, or custom fixtures that can adapt to various part geometries while providing the necessary stability during processing.

Various assemblies, units, components and elements of the additive casting system **30** of Fig. 3a may be arranged around generic part 100 and participate in the construction of specific part 102.

The configuration shown in **Fig. 6d** is good also for field implementation.. By eliminating the need for a traditional build plate and allowing the additive casting system to be assembled around the input part, this approach enables in-situ repair and modification of large-scale components that would be impractical or impossible to transport to a fixed manufacturing facility. The modular nature of the metal processing and mold construction assemblies allows them to be positioned and calibrated relative to the secured input cast, with the interfacing mold region providing the necessary reference plane for the additive build process.

Embodiments of the present disclosure were described with respect to the additive casting of grey iron. The present disclosure is not limited by the type of cast material. The present disclosure is applicable for the additive casting of other metals, including ductile iron, Inconel, steel, Titanium and other metals, with the appropriate modifications.

Embodiments of the present disclosure were described with respect to the recreation of a part that was removed from an input part using the same metal type. The present disclosure is not limited by this example.

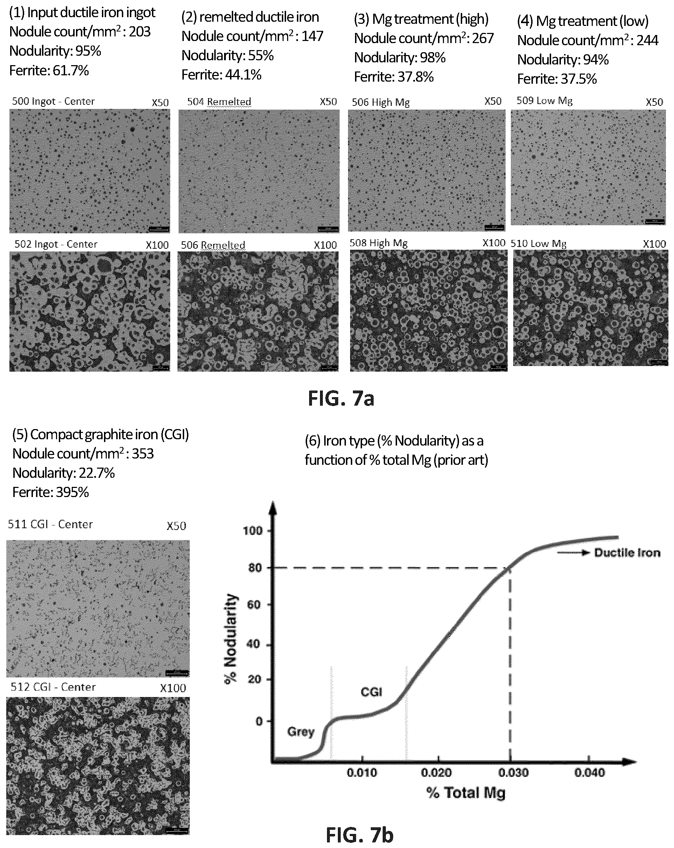

Embodiments of the present disclosure are applicable for employing the full range of metal processing facilitated by additive casting. Specifically, embodiments of the present disclosure enable the provision of a wide variety of cast-property modifying powder to the interface region and to the added metal, as illustrated with reference to Figs. **7a-7b** of

### Appendix A.

### Appendix A - Voxelated Additive Casting

Additive treatment of voxels of metal having a minimum volume for individual processing (voxelated additive casting) can result in the cast having metal properties characterizing traditional casting. For illustration, embodiments of voxelated additive casting facilitate treating with additives and/or inoculants molten metal voxels, each in the range of 2 - 100 cc of molten metal. Voxels of molten metal of the minimum volume or above can be individually processed, giving rise to cooling profiles of 1, 2, or more seconds up to minutes. Such cooling profiles are longer, e.g., compared to the cooling profiles of other additive manufacturing techniques (e.g., DED, SLM), and thus facilitate metallurgical and chemical processes.

The provision of cast-property modifying powder to the interfacing object region and as part of the processing of newly-added metal involve a minimum volume of approximately 2 cubic centimeters for ferrous alloys. The minimum volume of approximately 2 cubic centimeters represents a critical threshold that works in conjunction with mold region containment. The mold regions provide the mechanical and thermal boundary conditions necessary to process these volumes, while the volumes themselves provide the thermal mass needed for proper metallurgical control. Without mold containment, such volumes of molten metal would be impossible to process with geometric stability. Without sufficient volume, even with mold containment, proper metallurgical processes cannot be adequately controlled or achieved. This threshold is governed by several interconnected metallurgical phenomena.

The determination of minimum volumes in additive casting is fundamentally driven by the metallurgical requirements of ferrous alloys' solidification and transformation processes. The minimum volume of approximately 2 cubic centimeters, for e.g., grey cast iron, represents a critical threshold below which proper metallurgical processes cannot be adequately controlled or achieved. This threshold is governed by several interconnected metallurgical phenomena:
(1) Thermal Mass Requirements: A sufficient volume of molten metal is essential to maintain the thermal conditions necessary for controlled solidification and transformation. Smaller volumes, such as those found in DED processes (0.0001-0.0005 cc), experience extremely rapid heat dissipation that prevents proper control over (i) nucleation and growth of graphite phases, (ii) pearlite formation and morphology and (iii) distribution and dissolution of inoculants and additives.
(2) Solidification Time Control: The voxel volume directly influences the solidification time through its thermal mass. A minimum volume of ferrous alloys of 2cc provides (i) cooling rates starting at the order of 1°C/second and slowly, allowing sufficient time for carbon diffusion and graphite formation; (ii) a processing window starting at the order of 1 second, essential for complete dissolution of inoculants; (iii) controlled temperature gradients that prevent premature freezing and allow proper phase transformations.
(3) Chemical Homogenization: Proper dissolution and distribution of inoculants and additives require (i) sufficient liquid metal volume for complete dissolution; (ii) adequate time for chemical homogenization through both diffusion and convection; and (iii) thermal conditions that prevent premature precipitation or segregation.
(4) Graphite Morphology Control: in the case of cast irons, the formation of desired graphite morphologies (whether flake, nodular, or compacted) requires (i) stable thermal conditions during nucleation and growth; (ii) sufficient time for carbon diffusion and graphite precipitation; and (iii) adequate volume for unimpeded growth of graphite structures.
(5) Microstructural Development: the achievement of desired matrix structures (pearlitic, ferritic, or mixed) depends on (i) controlled cooling through the eutectoid transformation temperature; (ii) sufficient time for the formation and growth of pearlite colonies; and (iii) volume-dependent thermal gradients that influence transformation kinetics.

These metallurgical requirements establish the lower boundary of approximately 2cc for the voxel volume. Volumes below this 2cc threshold may result in: excessive cooling rates that prevent proper phase transformations; insufficient time for complete dissolution of additives; inadequate control over graphite morphology and distribution; inconsistent matrix microstructure; and poor mechanical properties

The upper limit of 100cc represents an upper volume that can be effectively and practically controlled while ensuring desired manufacturing throughput for certain applications and maintaining (i) uniform temperature distribution throughout the melt zone; (ii) consistent cooling rates across the entire volume; (iii) homogeneous distribution of additives and inoculants; and (iv) predictable and repeatable microstructural development. Embodiments of the voxelated additive casting are not limited to the upper limit of 100cc and higher metal volumes can be processed in a voxelated manner.

The additive processing of voxels of molten metal facilitates the modification of cast properties.

The cast property modifying powder may comprise a chemically-modifying material and/or a metallurgically-modifying material.

For the processing of cast iron alloys, the cast property modifying powder material may be one or more powder materials selected from (1) a group of grain refiners consisting of Titanium-based alloy, Zirconium-based alloy, Niobium-based alloy and/or (2) a group of inoculants consisting of Ferrosilicon-based inoculants, aluminum-based inoculants, Silicone carbide-based inoculants, Calcium-based inoculants, Strontium-based inoculant, Cerium-based inoculants, Sodium-based inoculants, Barium-based inoculants, Rare earth elements and/or (3) a group of Deoxidizers consisting of Aluminum, Silicon, Manganese, Calcium and/or (4) a group of Microstructure modifiers consisting of Magnesium, Cerium, Lanthanum, Yttrium and/or (5) a group of Carbide formers consisting of Vanadium, Titanium, Tellerium, Tungsten, Molybdenum.

For the processing of steel or steel alloys, the cast property modifying powder material may be one or more powder material selected from (1) a group of grain refiners consisting of Aluminum-based alloy, Titanium-based alloy, Zirconium-based alloy, Niobium-based alloy and/or (2) a group of Deoxidizers consisting of Aluminum, Silicon, Manganese, Calcium and/or (3) a group of Microstructure modifiers consisting of Magnesium, Cerium, Lanthanum, Yttrium and/or (4) a group of Carbide formers consisting of Vanadium, Titanium, Tungsten, Molybdenum, Niobium and/or (5) a corrosion resistance modifiers consisting Chromium, Nickel, Molybdenum, Silicon, Aluminum, Titanium, Niobium, Phosphorus.

The cast property modifying powder is provided to the processed metal in order to initiate a cast property modification process such as (1) controlled graphite nucleation and growth achieving a predetermined graphite morphology and/or distribution; (2) controlled phase transformation producing a predetermined ratio of phases; (3) in-situ chemical composition modification achieving predetermined local material properties; (4) Grain refinement producing enhanced mechanical properties; (5) precipitation hardening; or (6) controlled solidification process producing predetermined dendrite arm spacing, or a combination thereof.

The quantitative relationships between additive concentrations and resulting properties are well-established through decades of industrial practice and academic research. These established relationships provide a reliable foundation for predicting and controlling the effects of additives in cast metals, making them particularly suitable for implementation in controlled voxelated casting processes. The challenge lies not in understanding what effects will be achieved but rather in precisely delivering known quantities of additives at the right time and location during the voxelated casting process.

According to embodiments of voxelated additive casting, the cast-property modifying powder type and mass for a volume of metal of a specific production layer is obtained based on known additive concentrations.

The type of cast-property modifying powder, especially its response to heating and remelting, is also considered. Some cast-property modifying powders are heat-sensitive and are subject to fading during subsequent reheating and remelting cycles inherent to the additive casting process. When a section of previously solidified metal that was treated with heat-sensitive cast-property modifying powder is reheated above its melting temperature, the effectiveness of the previously added powder diminishes according to a characteristic fading rate. This fading occurs due to various metallurgical phenomena, including oxidation, vaporization, and chemical decomposition of the active elements in the powder. To compensate for this fading effect, embodiments of the present disclosure implement an adaptive powder introduction strategy wherein the allocated amount of cast-property modifying powder delivered to a specific melt zone is adjusted based on (1) the predetermined fading rate of the specific powder being used, (2) the thermal history of the previously-solidified metal in the melt zone, including the number and intensity of reheating cycles it has experienced, and (3) the target properties desired in the final cast. This adaptive strategy ensures consistent metallurgical and mechanical properties throughout the cast despite the cumulative effects of repeated thermal cycles on the active elements in the cast-property modifying powder.

Embodiments of voxelated additive casting are useful for the processing of large metallic parts. For illustration, in some embodiments, 3, 5, 10, 20, 30, 40, and more layer production iterations can be performed. In some embodiments, layer heights may range from 2 millimeters to 12, 15, or 20 millimeters. The melt zone width may be in the range of 4-100mm, melt zone length 4-100mm, and melt zone depth - in the range of 2-50mm and more. For example, the depth of the melt zone may be extended up to 120mm (the upper limit for the voxel's volume to be melted and remelted depends, among other factors, in the ability of the respective mold region to withstand heating and reheating cycles of the metal with no failure). The amount of molten metal to be reheated and remelted in the production of a single working area - the voxel - may be in the range of 1cc, 2cc, 5cc, 10cc, and more, up to 100cc (approximately 14-720 grams of grey cast iron).

**Figs. 7a-7b** refers to **Experiment 2,** which deals with ductile iron. Ductile iron is characterized by graphite in the form of nodules rather than flakes, as in grey iron. Nodule formation is achieved by adding nodulizing elements, most commonly Mg (magnesium). Mg boils at 1100 °C.

In **Experiment 2,** ductile iron ingots were used as input for five experimental steps. In the first step of **Experiment 2,** the properties and microstructure of the input ductile iron were measured, and the results are shown in the result set (1) of **Fig. 7a****.**

In the second step of **Experiment 2,** the input ductile iron ingots were heated - scanned by a surface heater (e.g., surface melter **116** shown in **Fig. 3a****).** The effect of remelting on the microstructure and properties of the input ductile iron is shown in **Fig. 7a** in result set **(2).** The morphological change of the graphite, mainly due to Mg fading, oxidation, and sulfur reaction, is evident. The nodularity is decreased from 95% to 55%. The remelted ductile iron input serves as a reference in the third and fourth steps of **Experiment 2.**

In the third step of **Experiment 2,** the input ductile iron ingots were scanned by a surface heater and received an amount of additive alloy with high Mg concentration, which provided according to the embodiments of voxelated additive casting (e.g., as described with reference to **Figs. 3a-3c****).** The effect of heat and high-Mg additive treatment on the microstructure and properties of the input ductile iron is shown in **Fig. 7a** in result set **(3).** The nodularity is increased with respect to the reference (result set **(2))** and is maintained, with a slight increase, with respect to the input ductile iron (result set **(1)).**

In the fourth step of **Experiment 2,** the input ductile iron ingots were scanned by a surface heater and received an amount of additive alloy with low Mg concentration, which provided according to the embodiments of voxelated additive casting (e.g., as described with reference to **Figs. 3a-3c****).** The same surface heating conditions, as in the third step, were applied in the fourth step. The effect of heat and low-Mg additive treatment on the microstructure and properties of the input ductile iron is shown in the result set **(4).** The nodularity is increased with respect to the reference (result set **(2))** and is maintained, with a slight decrease, with respect to the input ductile iron (result set **(1)).**

In the fifth step of **Experiment 2,** the input ductile iron ingots were scanned by a surface heater and received an amount of additive alloy with high Mg concentration, which provided according to the embodiments of voxelated additive casting (e.g., as described with reference to **Figs. 3a-3c****).** In comparison to the third and fourth steps, different surface heating conditions were applied. The effect of heat and high-Mg additive treatment on the microstructure and properties of the input ductile iron is shown in Fig. 7b in result set **(5).** The microstructure and properties of compacted graphite iron are exhibited.

**Experiment 2** shows that the application of material treatment techniques and operation control according to embodiments of voxelated additive casting, recreated expected theoretical and experimental results of the general art, e.g., as depicted in **graph (6)** of **Fig. 7b** (taken from: Dr. Steve Dawson and Tom Schroeder "Compacted Graphite Iron: A Viable Alternative" Based on a paper published in Engineered Casting Solutions AFS Spring 2000, SinterCast 09/02 B-15-15-0.3.

### The application of voxelated additive casting for Hybrid Casting

**Experiment 1** - the recreation of a section of a part, and **Experiment 2** - the treatment of input ductile iron with remelting and with the provision of a cast property modifying powder, demonstrate the repeatability nature of voxelated additive casting with the addition of additives and/or inoculations according to embodiments of the present disclosure. **Experiments 1** and **2** further demonstrate the ability to control and impact cast microstructure and properties by controlling the operational parameters of the casting system and processing molten metal in a voxelated manner.

In some embodiments of the present disclosure, the resultant hybrid cast component is composed of a base portion fabricated by a traditional casting process, the base portion having an interfacing region; and an additive cast portion metallurgically bonded to the interfacing region of the base portion, wherein the additive cast portion is formed through an additive casting process comprising layer-by-layer formation of a stack of production layers, and wherein the interfacing region and the additive cast portion form a continuous metallic structure having a metallurgical bond characterized by an absence of oxide residues between the base portion and the additive cast portion.

In some embodiments of the present disclosure, the hybrid cast component is made of a base portion and an additive cast portion comprising ferrous alloys; the interfacing region has a depth of 2-150 millimeters from a surface of the base portion; and at least one of the base portion and the additive cast portion comprises cast property modifications selected from the group consisting of: controlled graphite nucleation and growth achieving a predetermined graphite morphology, controlled phase transformation producing a predetermined ratio of phases, in-situ chemical composition modification achieving predetermined local material properties, grain refinement producing enhanced mechanical properties, precipitation hardening, and controlled solidification process producing predetermined dendrite arm spacing.

While embodiments of the present disclosure were described with respect to a specific system configuration and a specific method of operation, other embodiments are feasible within the scope of the present disclosure, as long as the following principals of voxelated additive casting are implemented: the processing of voxels of molten metal of at least a minimum volume, residing within corresponding mold regions.

Unless specifically stated otherwise, as apparent from the preceding discussions, it is appreciated that, throughout the specification, discussions utilizing terms such as "processing," "computing," "calculating," "determining," or the like refer to the action and/or processes of a general-purpose computer of any type, such as a client/server system, mobile computing devices, smart appliances, cloud computing units or similar electronic computing devices that manipulate and/or transform data within the computing system's registers and/or memories into other data within the computing system's memories, registers or other such information storage, transmission or display devices.

Embodiments of the present disclosure may include apparatus for performing the operations herein. This apparatus may be specially constructed for the desired purposes, or it may comprise a computing device or system typically having at least one processor and at least one memory, selectively activated or reconfigured by a computer program stored in the computer. The resultant apparatus, when instructed by software, may turn the general-purpose computer into inventive elements as discussed herein. The instructions may define the inventive device in operation with the computer platform for which it is desired. Such a computer program may be stored in a computer readable storage medium, such as, but not limited to, any type of disk, including optical disks, magnetic-optical disks, read-only memories (ROMs), volatile and non-volatile memories, random access memories (RAMs), electrically programmable read-only memories (EPROMs), electrically erasable and programmable read-only memories (EEPROMs), magnetic or optical cards, Flash memory, disk-on-key or any other type of media suitable for storing electronic instructions and capable of being coupled to a computer system bus. The computer readable storage medium may also be implemented in cloud storage.

Some general-purpose computers may comprise at least one communication element to enable communication with a data network and/or a mobile communications network.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present disclosure are not described with reference to any particular programming language. It will be appreciated that a variety of programming languages may be used to implement the teachings of the present disclosure as described herein.

While certain features of the present disclosure have been illustrated and described herein, many modifications, substitutions, changes, and equivalents will now occur to those of ordinary skill in the art. It is, therefore, to be understood that the appended claims are intended to cover all such modifications and changes as fall within the true spirit of the present disclosure.

## Claims

1. A hybrid casting method for processing an input part to receive a final cast having an additive cast portion, the method comprising applying an additive casting process on a build area of the input cast, the hybrid casting method further comprising: constructing an interfacing mold region in the build area at least around an interfacing region between the build area of the input cast and the additive cast portion, heating the interfacing region and generating a melt zone in the interfacing region prior to applying the additive casting process.

2. The hybrid casting method according to claim 1 wherein the method further comprises optionally providing at least one cast property modifying powder to the interfacing region.

3. The hybrid casting method according to claim 1 or 2 further comprising one or more operations of a group consisting of:
- input cast preparation,
- build area preparation,
- positioning and alignment,
- interfacing region processing, and
- post processing.

4. The hybrid casting method according to any of claims 1 to 3, wherein constructing the interfacing mold region comprises constructing a multi-element support structure including one or more of:
- an enclosure element forming an outer containment structure;
- an internal support element filling at least a portion of hollow volumes in the input cast and space between the input cast and the enclosure element; and
- an interface mold element defining a build plane for the interfacing region and a subsequent additive cast portion.

5. The hybrid casting method according to claim 4, wherein different support elements are made of different mold material.

6. The hybrid casting method according to claim 3 wherein the input cast preparation operation comprising one or more operations of a group consisting of:
- removing oil from the input part or a portion thereof,
- cleaning the input part or a portion thereof,
- sand blasting the input part or a portion thereof,
- generating a digital representation of the input part or a portion thereof,
- obtaining a digital representation of the input part or a portion thereof, and
- assessing or receiving material composition and properties of the input part or a portion thereof.

7. The hybrid casting method according to claim 3 wherein the build area preparation operation comprising one or more operations of a group consisting of:
- generating a build plan for at least one of the interfacing zone, the mold interfacing region, the melt zone in the interfacing zone, a provision of the inoculant and/or additive powder and the additive casting process,
- generating a support and/or encoring plan for part feature/s, and
- generating an arrangement plan for casting system units in accordance with the build plan.

8. A hybrid casting method according to claim 7 wherein generating a build plan comprises generating the build plan in response to a digital part representation of the input cast and material composition and properties of the input cast, wherein the build plan specifies one or more of processing parameters relating to build area support, interfacing mold region, interfacing zone and the melt zone in the input cast.

9. The hybrid casting method according to claim 3 wherein the interfacing region processing operation comprised one or more operations of a group consisting of:
- filling hollow input cast features with one or more support material,
- heating portions of the input cast outside of the build area to thereby reduce heat lose from the build area to the input cast,
- providing at least one cast property modifying powder to the melt zone to compensate for a fading of said cast property modifying powder in response to heating and melting, and
providing at least one cast property modifying powder to the melt zone to cause a cast property modifying process resulting in predefined target properties of the final cast.

10. The hybrid casting method according to claim 4 wherein the post processing operation comprising removing mold regions and post processing finishing.

11. The hybrid casting method according to any of claims 1 to 10 wherein the additive casting process comprises a layer-by-layer formation of a stack of production layers, each production layer comprising at least one object region associated with at least one mold region, and formation of each production layer comprises forming the at least one mold region and depositing molten metal therein prior to forming a subsequent production layer.

12. A hybrid casting method according to any of claims 1 to 10 wherein the additive casting process comprises generating a stack of production layers having mold regions and object regions, the mold regions constituting a mold-in-progress and the object regions constituting a cast-in-progress held within in the mold-in-progress, the method further comprising, for each production layer, iteratively constructing a mold region of a current production layer on top of said stack of production layers and processing an object region of the current production layer, wherein processing the object region of the current production layer comprises:
- melting a first volume of previously-solidified metal in the cast-in-progress and dropping a second volume of molten metal into the first volume, wherein said first volume and said second volume accumulate into a melt zone of at least a predetermined minimum volume of molten material required for cast-property modification processes;
- providing an allocated amount of at least one cast-property modifying powder to the melt zone;
- maintaining the melt zone under a melt state for a predetermined minimum duration; and
maintaining the melt zone under inert environment while in melt state.

13. The hybrid casting method of claim 12 wherein said molten metal is composed of a ferrous alloy and wherein said predetermined minimum volume is at least of 2 cubic centimetres.

14. The hybrid casting method of claim 12, wherein the allocated amount of said cast property modifying material is adjusted based on a predetermined fading rate of the cast property modifying powder during remelting.

15. The hybrid casting method according to any of claims 1 to 14 wherein the metal is one or more of a group consisting of: cast grey iron, ductile iron, steel, Inconel, titanium alloys, cast iron alloys.

16. A hybrid casting system for processing an input part to receive a final cast having an additive cast portion, the system comprising a mold construction assembly and a metal processing assembly operable in synchrony to produce the additive cast portion by forming a stack of production layers having mold regions and object regions, the mold regions constituting a mold-in-progress and the object regions constituting a casting-in-progress held within in the mold-in-progress,
wherein the metal processing assembly comprises a surface melter for melting a first volume of previously-solidified metal in the casting-in-progress; a metal depositor for dropping a second volume of molten metal into said first volume; a powder introduction unit for selectively delivering an allocated amount of at least one cast-property modifying powder, wherein said first volume and said second volume accumulate into a melt zone of at least a predetermined minimum volume of molten material required for cast-property modification processes,
wherein said mold construction assembly is further operable to construct an interfacing mold region around at least a portion of the input part thereby defining an interfacing region, and the metal processing assembly is further operable for heating the interfacing region and generating a melt zone in the interfacing region, and optionally providing at least one cast property modifying powder to the interfacing region, and
wherein said stack of production layers is fabricated onto said interfacing region.

17. The hybrid casting system according to claim 16, wherein the mold constructor is further configured to construct a multi-element support structure around at least a portion of the input cast, said support structure comprising:
- an enclosure mold element;
- an internal support element; and
- an interface mold element defining a build plane, made of mold material used for additive casting process,
wherein the mold constructor is operable to construct the support elements in a sequence that ensures structural stability during the hybrid casting process.

18. The hybrid casting system according to claim 16 or 17 further comprising one or more of:
an input part scanner operable for generating digital part representation of said input part;
an input part cleaner operable for carrying out input part cleaning;
an input part analyzer operable for assessing material composition and properties of the input part; and
a build plan generator operable for generating a build plan for the final part based on at least said digital part representation, said material composition and properties of the input part and target properties of the final part.

19. The hybrid casting system according to any of claims 16 to 18 wherein said metal processing assembly further comprises an inert environment unit, and wherein at least sections of at least said depositor, surface melter and powder introduction unit in proximity to said melt zone and said free-fall molten metal are maintained under inert environment.

20. A hybrid casting system for receiving an input cast and adding metal to the input cast by producing, on a build area on the input cast, multiple production layers having mold regions and object regions defined by the mold regions, one current production layer after the other, the system comprising:
- a movable mold constructor operative to construct a mold region for a current production layer;
- a movable molten metal depositor operative to deposit molten metal at a predetermined deposition temperature in multiple working areas at the object region of the current production layer;
- one or more surface heater operative for heating the multiple working areas;
- one or more powder feeder operative to provide inoculant and/or additive powder to the working areas;
- at least one motion unit coupled to the movable build table, the movable mold constructor, movable molten metal depositor, the at least one heater and the at least one or more powder feeder; and
- a controller operative to iteratively control at least the build table, mold constructor, molten metal depositor, at least one heater, the at least one powder feeder, and the at least one motion unit to produce the metal object according to a predetermined build plan,
wherein the controller is operative to heating the multiple working areas further comprises generating a melt zone in working areas,
to construct support for an interfacing mold region in the build area and to selectively provide inoculant and/or additive powder to the interfacing object region.
